Europäisches Patentamt

European Patent Office

Office européen des brevets

(11) Publication number: 0 398 657
A1

# EUROPEAN PATENT APPLICATION

(21) Application number: 90305238.9

(51) Int. Cl.5: A21C 9/06

(22) Date of filing: 15.05.90

(30) Priority: 15.05.89 US 352005

(43) Date of publication of application:
22.11.90 Bulletin 90/47

(84) Designated Contracting States:
DE FR GB IT

(71) Applicant: CONTINENTAL BAKING COMPANY
1034 Danforth Drive
St. Louis, Missouri 63102(US)

(72) Inventor: Moshier, Mark
910 G Dogwood Creek Drive
Manchester, MO 63021(US)
Inventor: Politte, Ron
12050 Avery Lane
Bridgeton, MO 63044(US)

(74) Representative: Tubby, David George et al
MARKS & CLERK 57-60 Lincoln's Inn Fields
London WC2A 3LS(GB)

(54) Dual injection cake filler apparatus.

(57) An apparatus for injecting soft baked goods or cakes with different fluids includes a manifold (12) defining a pair of spaced supply channels or chambers (18, 20), a supply valve (20) defining a port and a slide gate valve (36). The slide gate valve (36) communicates with a passage (44) and suck back chamber (42, 46). A suck back piston (90) is positioned within the suck back chamber (42, 46). Secured to the underside of the manifold is a needle plate (16). A plurality of dual passage injection needles (82) are secured to the plate (6). The plate (16) defines a plurality of channels (88, 89) which communicate with the injection needles (82).

FIG. I

EP 0 398 657 A1

## DUAL INJECTION CAKE FILLER APPARATUS

The present invention relates to apparatus for filling cake products or soft baked goods and more particularly to a novel injection head assembly for simultaneously filling such goods with different semi-fluid substances, such as a cream; it also provides a process employing such apparatus to fill cakes and other baked goods. As used herein, the term "cream" includes not only natural cream, but also synthetic creams and treated creams, e.g. fat-reduced creams.

Various cakes or soft baked goods which are filled with a cream or a similar semi-fluid substance are presently available. Even in mass production, such goods are generally baked in individual pans. The pans are arranged in parallel rows and are conveyed to a filler apparatus, where the filling is injected into them. Known apparatus of this type fills a plurality of cakes with a single semi-fluid substance, such as a cream. Typical cake filler apparatus includes a main frame, a conveyor supporting a plurality of the pans in elongated rows arranged in tandem, a filler injection head and a lifter frame. The filler injection head is fixed on the main frame. The lifter frame raises the pans, and hence the cakes, into contact with the injection head needles. An example of one such apparatus may be found in US A-3 669 005.

An example of an injection head used in presently existing cream filler apparatus may be found in US A-3 999 691. As shown therein, the filler includes a manifold assembly having a supply channel or chamber, which communicates with a needle plate through a supply valve, a slide gate valve and a gate port. A suck back piston is positioned in a suck back chamber. The suck back piston counteracts the tendency of the fluid or semi-fluid substance dispensed by the head to extrude through the dispensing needles and drip or smear on the exterior surface of the baked goods. A plurality of injection needles is supported on the needle plate. The needles communicate with an input aperture through an interconnecting array of branching channels.

However, the known types of cake or soft baked goods filling apparatus suffer from several problems or limitations, most notably that they are limited to the injection of a single substance. Thus, presently existing equipment cannot produce a cake which is simultaneously filled with two different substances, such as cream and a fruit filling, which would otherwise be a highly desirable type of product.

In accordance with the present invention, we have now discovered that these problems may be solved by providing a dual injection cake filler assembly or injection head. The head includes a manifold for directing two fluid substances to a needle plate. Supported on the needle plate are a plurality of dual passage injection needles. Provision is made for directing the different fluid substances to each of the needles. The needles of the head can simultaneously inject fluid substances from different sources into the cake.

Thus, the present invention consists in a dual injection cake filler apparatus for injecting cakes with semi-fluid substances, said apparatus comprising:

a manifold defining a pair of spaced supply channels each having an outlet passage;

valve means on said manifold for controlling flow from said channels to said outlet passages;

a needle plate secured to said manifold, said needle plate defining at least a pair inlet recesses, a plurality of needle apertures, at least a pair of delivery channels with each channel extending from one of said inlet recesses and plurality of needle inlet portions between said channels and said needle apertures; and

a plurality of split needles each disposed in one of said needle apertures and defining a pair of passages having upper inlets and lower needle outlet ports, said upper inlets each communicating with one of said channels through one said needle inlet portions, said channels and needle inlet portions being dimensioned so that substantially uniform quantities of semi-fluid material are ejected from said needle discharge ports whereby a single cake may be simultaneously filled with two different fillings.

The invention also provides a process for filling a cake or other soft baked goods with two semi-fluid substances using the apparatus defined above, in which each semi-fluid substance is fed to one of said spaced supply channels and is injected via one of the passages in said needle into the cake or other soft baked goods.

The invention is further illustrated by the accompanying drawings, in which:

Figure 1 is a transverse, cross-sectional view of a dual injection head in accordance with the present invention;

Figure 2 is a top, perspective view of a needle plate in accordance with the present invention; and

Figure 3 is a cross-sectional view of a dual passage injection needle employed in the present invention.

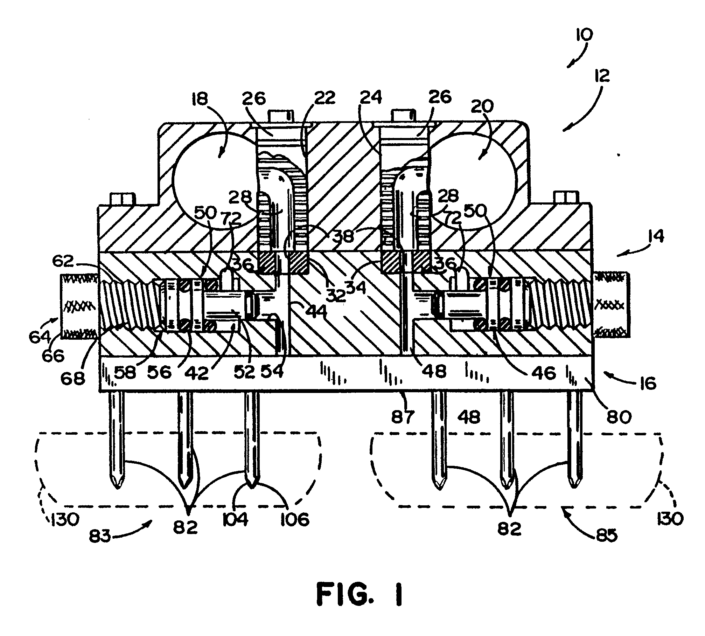

An injection head or cake filler apparatus in accordance with the present invention is illustrated in Figure 1, where it is generally designated by the numeral 10. Figure 1 illustrates a transverse cross section of an elongated head. Apparatus 10 includes an upper manifold 12, a lower manifold 14 and a needle plate assembly 16. Upper manifold 12 defines elongated main supply chambers or channels 18 and 20. Channels 18 and 20 are connected to suitable sources of the desired fillers, which could be the same, if desired, or, more probably, would be different. The apparatus is designed to permit the injection of two different fillers, such as a cream and a fruit filling. The fillings are delivered to a respective channel 18 or 20 under pressure. Upper manifold 12 defines a pair of vertical bores 22 and 24. Bores 22 and 24 receive adjustable valves 26. Each of valves 26 defines a generally L-shaped bore or valve port 28. Valves 26 are rotatably positionable within bores 22 and 24 so that valve ports 28 may be selectively aligned with their respective chambers 18 and 20. When so positioned, fluid will flow from the chambers through the ports.

Lower manifold 14 defines elongated grooves 32 and 34. Slidably positioned in each of the grooves is a slide valve 36. Each slide valve 36 defines an aperture 38. Each aperture is alignable with one of the valve ports 28 upon sliding movement of valve 36. Lower manifold 14 also defines a suck back chamber 42 which intersects with a throughbore or outlet passage 44. A second suck back chamber 46 intersects with a second throughbore or outlet passage 48. Passage 44 is aligned with bore 22 and passage 48 is aligned with bore 24.

A suck back piston 50 is positioned within each suck back chamber 42 and 46. Each piston 50 includes a reduced diameter portion 52 extending within a reduced bore portion 54. Bore portion 54 opens into an enlarged bore portion 56. Piston 50 includes an enlarged diameter portion 58 slidable within bore portion 56. Bore portion 56 includes a threaded portion 62. An adjustment cap 64, including a head 66 and a threaded portion 68, is threaded into portion 62. Chambers 42 and 46 define a pressure or air inlet port 72. In addition, another air inlet is positioned adjacent the threaded portion of the chambers and at the rear of the enlarged piston portion. As should be apparent, air under pressure entering ports 72 will shift the suck back pistons away from their respective vertical passages 44 and 48, creating a suction effect within the passages. Air or other fluid under pressure exerted against the backside of the enlarged piston portions will shift the pistons towards their passages to help force fluid therein towards the needle plate assembly 16. The suck back pistons operate in essentially the same manner as set forth in the aforementioned US A-3 999 691.

Needle plate assembly 16 includes a needle plate 80 and a plurality of dual passage needles 82. Needles 82, as best seen in Figure 1, are divided into two sets 83 and 85, each including three needles. The fluid substances in the main supply chambers or channels 18 and 20 are directed through bores 44 and 48 to needle plate 80. Provision is made for distributing the fluid to each of the needles 82. Each needle simultaneously injects both fluids into the cake or soft baked goods product.

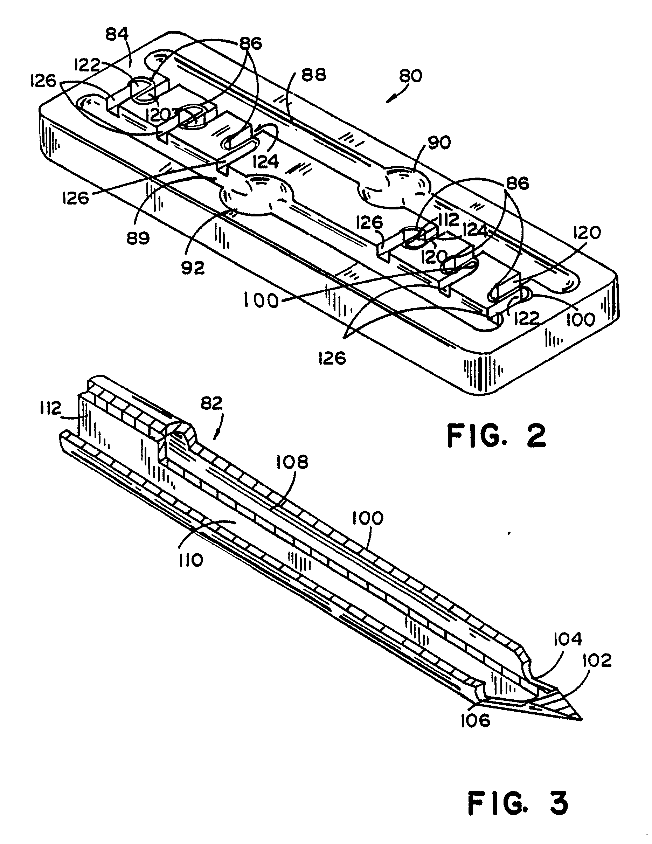

Needle plate 80 includes an upper surface 84 (Figure 2) and a lower, flat surface 87. Upper surface 84, as best seen in Figure 2, defines a plurality of needle apertures 86. Needles 82 are press-fitted within the apertures 86. A pair of delivery or feed channels 88 and 89 extend in spaced, parallel relationship on opposite sides of needle apertures 86. Channels 88 and 89 intersect main hemispherical inlet ports or recesses 90 and 92. Recesses 90 and 92 are generally circular in plan. The plate assembly is dimensioned so that port 90 is coaxial with through passage 48 of the lower manifold 14. Port 92 is coaxial with through passage 44 of the lower manifold 14. As a result, the fluid substances being delivered from the upper manifold will be directed into the respective ports 90 and 92 and will proceed along feed channels 88 and 89.

As seen in Figures 2 and 3, each needle 82 includes an upper elongated cylindrically shaped portion 100 and a lower conical portion 102. Portion 102 defines outlet ports 104 and 106. The interior of needle 82 is divided into separate passages 108 and 110 by a divider plate 112. As seen in Figure 2, the upper end of cylindrical portion 110 defines passages or inlets 120 and 122. Each passage inlet 120 is connected to channel 88 by a secondary channel feed or needle inlet portion 124. Each passage or needle inlet 122 is connected to feed channel 89 by a secondary channel feed or needle inlet portion 126. As a result, passages 108 and 110 of needle 82 will be fed fluid substances from a respective one of the channels 88 and 89 and hence the main supply chambers or channels 18 and 20.

In order to ensure that substantially equal quantities of the fluid or semi-fluid substances are discharged from the needle outlets 104 and 106 regardless of the position of the needle along the feed channels 88 and 89, provision is preferably made to accommodate the pressure drop as the fluid or semi-fluid substance flows along the channels. As seen in Figure 2, the secondary channel feeds 126 and 124 closest to their respective main inlet ports or recesses 90 and 92 have a depth which is less than the depths of the downstream secondary feed channels. The further the feed channel is from the inlet ports, the greater the depth. As a result, the pressure differential is accommodated and substantially equal flow from the outlets is achieved.

In operation, chambers 18 and 20 of injection head 10 are connected to suitable sources of fluid or semi-fluid substances. One source may, for example, supply a cream, and the other source may, for example, supply a fruit filling. Valves 26 within the respective bores 22 and 28 are adjusted so that the fluid or semi-fluid substance flows to slide valves 36. Valves 36 are opened when ports 38 are aligned with valve ports 28. Fluid is then discharged through throughbores or passages 44 and 48 to hemispherical inlet portions 90 and 92. Pressure may be applied behind the enlarged portions of the suck back pistons 50. Reduced cylindrical portions 52, therefore, move towards their respective bores 44 and 48 to assist in forcing fluid into the needle plate assembly 16. Fluid passes along the supply channels 88 and 89 to a respective inlet port of the dual passage needles. The fluid then passes downwardly through the passages 108 and 110 of the needles (Figure 3) to the discharge outlets 104 and 106. As described in the aforementioned US A-3 669 005, cakes 130, schematically shown in Figure 1, are moved upwardly into engagement with the needles. In the embodiment illustrated, a pair of cakes could be arranged in tandem so that the first set of needles engages one of the cakes, and the second set engages the second of the cakes. The combination of fluid or semi-fluid substances is then injected into the cakes. Upon completion of the injection cycle, the cakes are lowered. The suck back pistons are moved away from their respective passages 44 and 48, creating a suction therein which pulls the fluid back up from the needles. This eliminates dripping or smearing on the cake exterior surface.

A plurality of individual needle plate assemblies 16 and corresponding valves and suck back pistons are preferably supported or mounted on manifolds 12 and 14. In one exemplary preferred embodiment, eighteen plates are supported on the undersurface of lower manifold 14. As a result, thirty-six cakes may be simultaneously injected with two different fluid substances. By way of illustration, in one exemplary preferred embodiment, plate 80 has an overall length of approximately 8.25 inches (21.00 cm) and a width of 1.75 inches (4.45 cm). Needle apertures 86 are positioned in two groups along the longitudinal centreline of plate 80. The outermost apertures are positioned on a centre 0.312 inch (0.79 cm) from the ends of the plate. The apertures are then positioned from each other on 1.175 inch (2.98 cm) centrelines. Recesses 90 and 92 are positioned from the closest adjacent needle aperture on 0.720 inch (1.83 cm) centres. The needle apertures 86 have a diameter of 0.312 inch (0.79 cm). The depths of the secondary feed channels 122 and 124 vary from their respective supply recesses 90 and 92 towards the ends of the plates with increasing depths. In this preferred embodiment, the channel closest to a port 90 and 92 has a depth of 0.041 inch (0.10 cm), the next channel has a depth of 0.085 inch (0.22 cm) and the outermost channel has a depth of 0.125 inch (0.32 cm). The channels 88 and 89 and recesses 90 and 92 have depths of 0.125 inch (0.32 cm). The undersurface of manifold 14 is flat. Clearly, these dimensions are merely those chosen for a specific machine and application and may be varied at will.

Other modifications to the examples given above are also clearly possible in the context of the present invention. For example, channels 88 and 89 and secondary channel feeds 124 and 126 could be formed in the undersurface of lower manifold 14. The upper surface of the needle plate 80 would, therefore, become flat. Such would involve only a reversal in the positioning of the channels and elements.

## Claims

1. A dual injection cake filler apparatus for injecting cakes with semi-fluid substances, said apparatus comprising:
a manifold defining a pair of spaced supply channels each having an outlet passage;
valve means on said manifold for controlling flow from said channels to said outlet passages;
a needle plate secured to said manifold, said needle plate defining a pair of inlet recesses, a plurality of needle apertures, a pair of delivery channels with each channel extending from one of said inlet recesses and a plurality of needle inlet portions between said channels and said needle apertures; and
a plurality of split needles each disposed in one of said needle apertures and defining a pair of passages having upper inlets and lower needle outlet ports, said upper inlets each communicating with one of said channels through one of said needle inlet portions, said channels and needle inlet portions being dimensioned so that substantially uniform quantities of semi-fluid material are ejected from said needle discharge ports whereby a single cake may be simultaneously filled with two different fillings.

2. A dual injection cake filler according to Claim 1, in which said plurality of needles define first and second sets, said sets each including an equal number of needles.

3. A dual injection cake filler according to Claim 1 or Claim 2, in which said delivery channels extend in spaced, generally parallel relationship from said inlet recesses.

4. A dual injection cake filler according to any one of Claims 1 to 3, in which each of said needles includes an elongaged cylinder having a lower cone portion, said needle outlet ports opening through said cone portion.

5. A dual injection cake filler according to any one of Claims 1 to 4, in which said needles each include an elongated divider plate dividing said needle into said passages.

6. A dual injection cake filler according to any one of Claims 1 to 5, in which said needle inlet portions have different depths.

7. An injection die assembly for use with a cake filler machine, said assembly comprising:
an elongated plate having an upper surface and a lower surface;
a plurality of needle apertures extending between said surfaces;
a pair of elongated channels defined by and opening through said upper surface, said channels extending in spaced relationship on opposite sides of said needle apertures; and
a plurality of dual passage needles, each needle being disposed in one of said needle apertures, said needles each defining first and second needle inlets, a pair of fluid passages and a pair of needle outlets, one of said channels being connected to said first needle inlets and the other of said channels being connected to said second needle inlets.

8. An injection die assembly according to Claim 7, in which said channels each define an enlarged inlet recess configured to receive a semi-fluid substance which is directed to said needle inlets by said channels.

9. An injection die assembly according to Claim 7 or Claim 8, in which said top surface of said plate further defines a plurality of secondary channel feed portions interconnecting said channels with each of said needles, said channels and said channel feed portions being dimensioned so that substantially equal quantities of the semi-fluid substances may be delivered to said needles.

10. An injection die assembly according to any one of Claims 7 to 9, in which each of said needles comprises a member having an elongated cylindrical portion, an upper inlet portion and a lower discharge portion, said lower discharge portion being conical in shape and defining said needle outlets.

11. An injection die assembly according to Claim 10, in which each of said needles further comprises an elongated divider plate extending within an interior of said member and separating the needle into said pair of fluid passages.

12. An injection die assembly according to any one of Claims 7 to 11, in which said channels each define an enlarged inlet recess configured to receive a semi-fluid substance which is directed to said needle inlets by said channels.

13. An injection die assembly according to any one of Claims 7 to 12, in which said channels extend in spaced, parallel relationship and said needles are separated into at least two groups, arranged in tandem along a longitudinal centreline of said plate.

14. An injection die assembly according to Claim 9 and Claim 13, in which said secondary channel feed portions have different depth dimensions within each group.

15. An injection die assembly according to Claim 12, in which said enlarged inlet recesses are substantially hemispherical in shape.

16. A dual injection cake filler head comprising:
an upper manifold defining spaced, parallel, main supply chamber, said chambers being intersected by valve bores;
a lower manifold defining a pair of throughbores each aligned with one of said valve bores;
valve means between said upper and lower manifolds for controlling the flow of fluids from said supply chambers to said throughbores;
a needle plate secured to said lower manifold and defining a plurality of needle apertures;
a plurality of dual passage needles, each needle being positioned within one of said needle apertures, said needles each defining a pair of inlets and a pair of outlets; and
one of said lower manifold and said needle plate defining port and channel means for connecting a first of said needle inlets with one of said throughbores and a second of said needle inlets with other of said throughbores so that fluids from said chambers are simultaneously discharged from the outlets of said needles.

17. A dual injection cake filler head according to Claim 16, in which said port and channel means are defined by said needle plate.

18. A dual injection cake filler head according to Claim 16 or Claim 17, further including supply valves, each supply valve being disposed in one of said valve bores and defining a valve port.

19. A dual injection cake filler head according to Claim 18, in which said valve means comprises:
a gate valve defining a gate valve port, said gate valve being slidably mounted on said lower manifold.

20. A dual injection cake filler head according to Claim 18, further including:
suck back means on said lower manifold and intersecting said throughbores for sucking back fluid from said needles.

21. A dual injection cake filler head according to Claim 20, in which said port and channel means are defined by said needle plate.

22. A dual injection cake filler head according to Claim 21, in which each of said needles comprises:

an elongated cylindrical member having a lower conical portion, said conical portion defining said outlets and a divider plate within said member separating said member into a pair of passages.

**FIG. 1**

EP 0 398 657 A1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| D,Y | US-A-3 999 691 (L.G. DOOM) <br> * Whole document * | 1-5,7-13,15-22 | A 21 C   9/06 |
| Y | FR-A-2 512 328 (F. HAAS Sr. et al.) <br> * page 17, line 16 - page 28, line 1; figures 3-27 * | 1-5,,7-13,15-22 | |
| A | EP-A-0 236 134 (NABISCO BRANDS, INC.) <br> * Abstract; figures 1-7 * | 1-5,7-13,15-22 | |
| A | EP-A-0 189 349 (NABISCO BRANDS, INC.) <br> * Page 23, line 18 - page 25, line 10; figures 4-10 * | 6,14 | |
| A | US-A-1 737 069 (G.G. BARBER) | | |
| A | GB-A-1 091 671 (SPILLERS LTD) | | |

|  |
|---|
| TECHNICAL FIELDS SEARCHED (Int. Cl. 5) |
| A 21 C |

The present search report has been drawn up for all claims

| Place of search | Date of completion of the search | Examiner |
|---|---|---|
| THE HAGUE | 13-07-1990 | FRANKS N.M. |

EPO FORM 1503 03.82 (P0401)